# EUROPÄISCHE PATENTSCHRIFT

(11) **EP 0 984 078 B1**
(45) Veröffentlichungstag und Bekanntmachung des Hinweises auf die Patenterteilung: **14.11.2001**
(21) Anmeldenummer: 99890165.6
(22) Anmeldetag: 25.05.1999
(51) Int. Cl.: C23G 1/36, C01B 7/19

(54) **Verfahren zur Gewinnung bzw. Rückgewinnung von Flusssäure und Salpetersäure**
Process for producing and/or recovering hydrofluoric acid and nitric acid
Procédé de production et/ou de récupération d'acide hydrofluorique et d'acide nitrique

(30) Priorität: 03.09.1998 AT 149698
(43) Veröffentlichungstag der Anmeldung: 08.03.2000
(73) Patentinhaber: Eurox Eisenoxydproduktions- und Vertriebsgesellschaft m.b.H., 1060 Wien (AT)
(72) Erfinder:
(74) Vertreter: Köhler-Pavlik, Johann, Dipl.-Ing.

(56) Entgegenhaltungen:
- EP-A- 0 775 760
- WO-A-96/27554
- AT-B- 374 508
- AT-B- 395 312
- DE-A- 4 315 551
- DE-A- 4 402 028
- DE-A- 4 417 104
- GB-A- 2 053 173
- US-A- 4 144 092

## Beschreibung

Die Erfindung betrifft ein Verfahren gemäß dem Oberbegriff des Anspruches 1.

Ein solches Verfahren ist z.B. aus der US-A 4,144,092 bekannt. Bei Beizverfahren von z.B. Eisen, Stahl oder Legierungen werden oft Beizlösungen, welche Flußsäure und Salpetersäure enthalten, verwendet. Die verbrauchten Lösungen werden gemäß der US-A 4,144,092 bis zur Übersättigung eingedampft. Das Konzentrat wird dann teilweise gekühlt und in eine Kristallisationszone übergeführt, wo sich ein kristallines Präzipitat bildet, welches im wesentlichen Metallfluoride enthält. Das Präzipitat wird von der Mutterlauge getrennt und gewaschen.

Die gebildete Mutterlauge enthält Flußsäure und im wesentlichen den gesamten Nitratanteil der ursprünglichen Lösung in Form von freier Salpetersäure und löslichen Nitraten. Diese Mutterlauge kann gegebenenfalls nach Aufstärkung mit Salpetersäure und Flußsäure wieder dem Beizverfahren zugeführt werden.

Das kristalline Präzipitat kann gemäß der US 4,144,092 einer pyrohydrolytischen Behandlung bei 500°C unterzogen werden. Dabei zersetzt sich enthaltenes Metallfluorid in Metalloxid und Flußsäure.

Obwohl das Verfahren gemäß US 4,144,092 schon längere Zeit bekannt ist, wurde es bislang in der Praxis nicht eingesetzt. Der Schwerpunkt der Forschung stützte sich einerseits auf Verfahren, in welchen keine Aufkonzentrierung der Lösung und Abtrennung des Präzipitates erfolgt, und bei denen in aufwendiger Weise nach der pyrohydrolytischen Behandlung insbesondere Salpetersäure und Flußsäure aus den Röstgasen unter Verwendung von Oxidationsmitteln absorbiert werden (z.B. AT-B 395 312). Ein weiteres Verfahren ist in der PCT-WO 96/27554 beschrieben: Hier wird die Lösung nur soweit eingedampft, daß der Großteil der enthaltenen Salpetersäure und Flußsäure aus der Lösung entfernt wird. Der verbleibende Rückstand wird ohne Fest-/Flüssigtrennung der pyrohydrolytischen Behandlung unterzogen, wobei eine oxidative Rückgewinnung der noch verbleibenden geringen Reste an Salpetersäure aus den Röstgasen nicht mehr notwendig ist.

Ein Problem des aus der US-A 4,144,092 bekannten Verfahrens besteht darin, daß die Fluoridkristalle im abgetrennten Präzipitat leicht aufschmelzen. Dies bewirkt, daß das Präzipitat bei der nachfolgenden pyrohydrolytischen Behandlung z.B. in einem Drehrohrofen an den Ofenwänden Beläge bildet, was die Durchführung des Verfahrens erschwert.

Die Erfindung stellt sich zur Aufgabe, ein Verfahren der eingangs erwähnten Art zur Verfügung zu stellen, mit welchem die Nachteile des Verfahrens der US-A 4,144,092 überwunden werden können und welches auf ökonomische Weise auch in industriellem Maßstab durchgerührt werden kann.

Die Aufgabe der Erfindung wird durch ein Verfahren gelöst, umfassend die Schritte
- Aufkonzentrieren der metallhältigen Lösung
- Bilden und Ausfällen eines Präzipitates aus der aufkonzentrierten Lösung
- Trennen des Präzipitates von der überstehenden Lösung und Waschen des Präzipitates
- Zufuhr des Präzipitates zu einer Pyrohydrolyse, wobei eine Umsetzung von Metallfluoriden in Metalloxide stattfindet,
welches dadurch gekennzeichnet ist, daß dem von der überstehenden Lösung abgetrennten Präzipitat vor bzw. bei der Zufuhr zur Pyrohydrolyse Metalloxide zugegeben werden.

Es hat sich überraschenderweise gezeigt, daß Metalloxide die Metallfluoridschmelze des Präzipitates aufnehmen können. Damit kann das Bilden von Belägen des Präzipitates in der nachfolgenden Pyrohydrolyse verhindert werden.

In einer bevorzugten Ausführungsform des erfindungsgemäßen Verfahrens wird dem Präzipitat ein Teil der bei der Pyrohydrolyse gebildeten Metalloxide zugegeben. Damit kann in ökonomischer Weise ohne die Notwendigkeit, zusätzlich Metalloxide beschaffen zu müssen, die Aufgabe des erfindungsgemäßen Verfahrens gelöst werden. Der zur Aufnahme des Präzipitates verwendete Teil der Metalloxide wird gemeinsam mit dem Präzipitat der Pyrohydrolyse zugeführt, womit eine Kreislaufführung möglich wird.

Bevorzugt beträgt das Gewichtsverhältnis zwischen Präzipitat und zugegebenem Metalloxid 1:0,2 bis 1:4. Besonders bevorzugt beträgt das Gewichtsverhältnis zwischen Präzipitat und zugegebenem Metalloxid 1:1 bis 1:2. Es ist somit ein Überschuß an Metalloxid vorteilhaft.

Das erfindungsgemäße Verfahren kann insbesondere dann vorteilhaft eingesetzt werden, wenn die metallhältige Lösung eine verbrauchte Salpeter-Flußsäure-Beizlösung ist.

Insbesondere in diesem Fall erweist es sich zusätzlich als vorteilhaft, wenn der gebrauchten Beizlösung vor, beim und/oder nach dem Aufkonzentrieren Schlämme aus dem Beizverfahren zugegeben werden.

Bislang wurden die bei der Beize anfallenden Beizschlämme, welche bis zu 50% mit Beizlösung beladen sind und weiters Kohlenstoff sowie nicht gelöste Oxide enthalten, aufwendig deponiert. Dabei entsteht ein erheblicher Verlust an rückgewinnbarer Salpetersäure und Flußsäure. Es hat sich nun gezeigt, daß eine Zugabe der Beizschlämme sowie von Spülwässern aus dem Beizverfahren bei der Aufkonzentrierung der verbrauchten Beizlösung keine Beeinträchtigung des Verfahrens bewirkt. Da die in den Beizschlämmen enthaltenen Säuren nunmehr ebenfalls bei der Ausfällung des Präzipitates in die überstehende Lösung übergehen, kann der Rückgewinnungsgrad für Salpetersäure und Flußsäure deutlich gesteigert werden.

Eine weitere bevorzugte Ausführungsform des erfindungsgemäßen Verfahrens besteht darin, daß der Beizlösung vor und/oder beim Aufkonzentrieren Spülwässer aus dem Beizverfahren zugegeben werden. Auch durch die Zugabe von Spülwässern aus dem Beizverfahren kann der Rückgewinnungsgrad für Salpetersäure und Flußsäure gesteigert werden. Dabei ist es bevorzugt, die Spülwässer bereits vor oder beim Aufkonzentrieren zuzugeben, um die mit den Spülwässern eingetragene höhere Wassermenge bereits beim Aufkonzentrieren wieder entfernen zu können.

Die Erfindung wird im folgenden durch eine Verfahrensskizze weiter erläutert:

Dabei ist zunächst mit 1 ein Tank für verbrauchte Beizlösung aus einem Beizverfahren mittels Salpetersäure/Flußsäure-Mischsäure bezeichnet. In diesen Tank wird die verbrauchte Beizlösung 13 eingebracht. Aus dem Tank wird die verbrauchte Beizlösung einem Verdampfer 2 zugeführt, in welchem die Lösung durch Eindampfen aufkonzentriert wird. Die dabei entstehenden sauren Gase werden über eine Kondensator 3 dem Kondensattank 4 zugeführt. Die eingedampfte, konzentrierte Lösung wird nunmehr zum Kristallisator 5 transportiert, in welchem das im wesentlichen aus Metallfluoriden bestehende Präzipitat gebildet wird. Dieses Präzipitat wird nunmehr in einer Filtrationseinheit 6 von der überstehenden Lösung abgetrennt.

Die Mutterlauge, die insbesondere einen Großteil der in der ursprünglichen Lösung befindlichen Salpetersäure enthält, wird einem Tank 11 für regenerierte Beizsäure zugeführt und kann gegebenenfalls nach Aufstärkung wieder dem Beizverfahren zugeführt werden (angedeutet durch den Pfeil mit der Bezugsziffer 16).

Das abgetrennte Präzipitat wird in der Filtrationseinheit 6, die z.B. als Nutsche ausgestaltet sein kann, gewaschen. Ein Teil der kondensierten Säure aus dem Kondensattank 4 kann der Filtrationseinheit 6 als Waschflüssigkeit zugeführt werden. Damit wird die Löslichkeit der ausgefällten Metallfluoride weiter erniedrigt. In diesem Fall wird das Präzipitat mit nitratfreiem Wasser oder reiner rückgewonnener Flußsäure nachgewaschen. Das ausgewaschene Präzipitat wird über einen Mischer 7 der Einrichtung 8 zur Pyrohydrolyse, z.B. einem Drehrohrofen, zugeführt. Im Mischer 7 werden dem Präzipitat erfindungsgemäß Metalloxide aus der Pyrohydrolyse, welche in einem Behälter 9 gelagert werden, zugegeben. Der restliche Teil 15 der Metalloxide wird zur weiteren Verarbeitung bzw. zum Verbraucher transportiert.

Aus den Abgasen der Pyrohydrolyse wird z.B. in einer Absorptionskolonne 10 rückgebildete Flußsäure zurückgewonnen. Diese zurückgewonnene Flußsäure kann dem Kristallisator 5 zugeführt werden, um die Löslichkeit der abzutrennenden Metallfluoride weiter zu verringern. Restgase werden über die Einrichtung 12 abgeführt.

In einer bevorzugten Ausführungsform der Erfindung werden Schlämme und/oder Spülwässer 14 aus dem Beizverfahren (nicht dargestellt) dem Verdampfer 2 zugeführt und dort gemeinsam mit der verbrauchten Beizlösung eingedampft und weiterbehandelt.

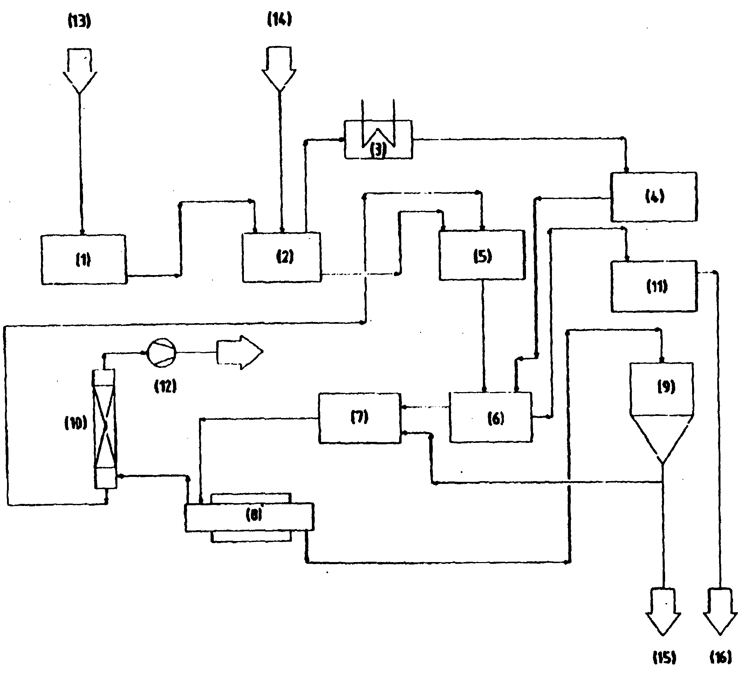

## Patentansprüche

1. Verfahren zur Gewinnung bzw. Rückgewinnung von Flußsäure und Salpetersäure aus metallhältigen, Flußsäure, Salpetersäure und/oder Fluoride und gegebenenfalls Nitrate enthaltenden Lösungen, umfassend die Schritte
- Aufkonzentrieren der metallhältigen Lösung
- Bilden und Ausfällen eines Präzipitates aus der aufkonzentrierten Lösung
- Trennen des Präzipitates von der überstehenden Lösung und Waschen des Präzipitates
- Zufuhr des Präzipitates zu einer Pyrohydrolyse, wobei eine Umsetzung von Metallfluoriden in Metalloxide stattfindet,
**dadurch gekennzeichnet, daß** dem von der überstehenden Lösung abgetrennten Präzipitat vor bzw. bei der Zufuhr zur Pyrohydrolyse Metalloxide zugegeben werden.

2. Verfahren gemäß Anspruch 1, **dadurch gekennzeichnet, daß** dem Präzipitat ein Teil der bei der Pyrohydrolyse gebildeten Metalloxide zugegeben wird.

3. Verfahren gemäß Anspruch 1 oder 2, **dadurch gekennzeichnet, daß** das Gewichtsverhältnis zwischen Präzipitat und zugegebenem Metalloxid 1:0,2 bis 1:4 beträgt.

4. Verfahren gemäß Anspruch 3, **dadurch gekennzeichnet, daß** das Gewichtsverhältnis zwischen Präzipitat und zugegebenem Metalloxid 1:1 bis 1:2 beträgt.

5. Verfahren gemäß einem der vorhergehenden Ansprüche, **dadurch gekennzeichnet, daß** die metallhältige Lösung eine verbrauchte Salpeter-Flußsäure-Beizlösung ist.

6. Verfahren gemäß Anspruch 5, **dadurch gekennzeichnet, daß** der Beizlösung vor, beim und/oder nach dem Aufkonzentrieren Schlämme aus dem Beizverfahren zugegeben werden.

7. Verfahren gemäß Anspruch 5 oder 6, **dadurch gekennzeichnet, daß** der Beizlösung vor und/oder beim Aufkonzentrieren Spülwässer aus dem Beizverfahren zugegeben werden.

## Claims

1. A method for recovering, or recycling, respectively, hydrofluoric acid and nitric acid from metal-containing, hydrofluoric acid-containing, nitric acid-containing and/or fluorides and, optionally, nitrates containing solutions, comprising the steps of
- concentrating the metal-containing solution,
- forming and precipitating a precipitate from the concentrated solution,
- separating the precipitate from the supernatant solution, and washing the precipitate,
- supplying the precipitate to a pyrohydrolysis, a reaction of metal fluorides to metal oxides occurring,
**characterised in that**, prior to or during the supplying to the pyrohydrolysis, metal oxides are admixed to the precipitate separated from the supernatant solution.

2. A method according to claim 1, **characterised in that** a part of the metal oxides formed at pyrohydrolysis is added to the precipitate.

3. A method according to claim 1 or 2, **characterised in that** the weight ratio between the precipitate and the admixed metal oxide is 1:0.2 to 1:4.

4. A method according to claim 3, **characterised in that** the weight ratio between the precipitate and the admixed metal oxide is 1:1 to 1:2.

5. A method according to any one of the preceding claims, characterised in that the metal-containing solution is a spent nitric acid-hydrofluoric acid pickling solution.

6. A method according to claim 5, **characterised in that** slurries from the pickling method are admixed during and/or after the concentrating procedure.

7. A method according to claim 5 or 6, **characterised in that** rinsing water from the pickling process is admixed to the pickling solution prior to and/or during the concentrating procedure.

## Revendications

1. Procédé pour la production respectivement la récupération d'acide fluorohydrique et d'acide nitrique à partir de solutions contenant des métaux, contenant de l'acide fluorhydrique, de l'acide nitrique et/ou des fluorures et éventuellement des nitrates comprenant les étapes
- de concentration de la solution contenant des métaux
- de formation et de précipitation d'un précipité à partir de la solution concentrée
- de séparation du précipité de la solution surnageante et de lavage du précipité
- d'introduction du précipité dans une pyrohydrolyse, une transformation des fluorures de métaux en oxydes de métaux ayant lieu,
**caractérisé en ce que** l'on ajoute au précipité séparé de la solution surnageante des oxydes de métaux avant respectivement pendant l'introduction dans la pyrohydrolyse.

2. Procédé selon la revendication 1, **caractérisé en ce que** l'on ajoute au précipité une partie des oxydes de métaux formés dans la pyrohydrolyse.

3. Procédé selon la revendication 1 ou 2, **caractérisé en ce que** le rapport massique entre le précipité et l'oxyde de métal ajouté est compris entre 1:0,2 et 1:4.

4. Procédé selon la revendication 3, **caractérisé en ce que** le rapport massique entre le précipité et l'oxyde de métal ajouté est compris entre 1:1 et 1:2.

5. Procédé selon l'une quelconque des revendications précédentes, **caractérisé en ce que** la solution contenant des métaux est une solution de décapage usée d'acide nitrique-fluorhydrique.

6. Procédé selon la revendication 5, **caractérisé en ce que** l'on ajoute à la solution de décapage des suspensions provenant du procédé de décapage avant, pendant et/ou après la concentration.

7. Procédé selon la revendication 5 ou 6, **caractérisé en ce que** l'on ajoute à la solution de décapage des eaux de rinçage provenant du procédé de décapage avant et/ou pendant la concentration.
